(19)

Europäisches
Patentamt
European
Patent Office
Office européen
des brevets

(11)　**EP 2 999 158 A1**

(12)　**EUROPEAN PATENT APPLICATION**
published in accordance with Art. 153(4) EPC

(43) Date of publication:
**23.03.2016  Bulletin 2016/12**

(21) Application number: **13884396.6**

(22) Date of filing: **08.11.2013**

(51) Int Cl.:
*H04L 9/32* (2006.01)　　　*H04L 9/14* (2006.01)

(86) International application number:
**PCT/CN2013/086753**

(87) International publication number:
**WO 2014/183392 (20.11.2014 Gazette 2014/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority:  **14.05.2013  CN 201310177428**

(71) Applicants:
• **Peking University Founder Group Co., Ltd**
  **Haidian District**
  **Beijing 100871 (CN)**
• **Peking University**
  **Beijing 100871 (CN)**
• **Beijing Founder Electronics Co., Ltd.**
  **Beijing 100085 (CN)**

(72) Inventors:
• **JING, Yanying**
  **Beijing 100085 (CN)**
• **YANG, Jianwu**
  **Beijing 100085 (CN)**
• **YU, Xiaoming**
  **Beijing 100085 (CN)**
• **ZHANG, Dan**
  **Beijing 100085 (CN)**

(74) Representative: **Dantz, Jan Henning**
**Loesenbeck - Specht - Dantz**
**Patent- und Rechtsanwälte**
**Am Zwinger 2**
**33602 Bielefeld (DE)**

(54)　**SECURE COMMUNICATION AUTHENTICATION METHOD AND SYSTEM IN DISTRIBUTED ENVIRONMENT**

(57)　The present invention relates to a secure communication authentication method and system in a distributed environment. By using the method and the system of the present invention, disadvantages in a platform identity certification process in TCG remote certification are alleviated, a method for platform identity certification is expanded, and by combining three technologies, that are, zero-knowledge proof, a Kerberos framework and a virtual TPM, a new verification method is designed, which is mainly intended to make improvement in the aspects in the existing method such as platform information exposure, a trusted third-party bottleneck and complexity avoidance. By using the method and the system of the present invention, the problems of privacy exposure and efficiency in mutual verification between remote servers in the existing distributed system.

Start

A user sends an identity certification request KRB_AS_REQ to an authentication server (AS) among Kerberos servers, and after AS receivers the request, the AS verifies a user identity ⟶ S1

After the user identity certification is passed, the AS sends, to the user, a ticket and an authentication code conforming to a user identity, the ticket comprising an AIK certificate generated by means of combination of the Kerberos server and a zero-knowledge proof ⟶ S2

When the user needs to perform remote certification with a remote certification server, the user carries out a session with a ticket granting server (TGS) by using the ticket and the authentication code, so as to obtain a ticket for communicating with an application server ⟶ S3

The user completes remote certification with the remote certification server ⟶ S4

End

FIG.3

EP 2 999 158 A1

**Description**

Technical Field

The present invention generally relates to the computer information security technologies field, and in particular, to a secure communication authentication method and system in distributed environment.

Background Art

With the coming of the age of big data, the process speed and function of a single server already cannot meet the time-based requirements of people to the information process, and the distributed parallel operation is imperative. However, when we use services and resources provided by the unknown servers and is unaware of their security conditions, we cannot make a secure communication interconnection therewith. Thus, it is significantly important for ensuring the distributed system to run safely and stably to perform effective security authentication before communication between two servers.

In the existing security protocols, security is not an important consideration to the operation system of the terminal platform. It is generally not considered to whether the requirements of the terminal platform are met when the terminal platform launches and loads the operation system. If there isn't a reliable terminal platform, it is impossible to talk about the trusted network and trusted network connection.

TCG (Trusted Computing Group) proposes an identity authentication technology in a remote certification process which provides a technical support for this problem. TCG is TCPA (Trusted Computing Platform Alliance) launched by Compaq, HP, IBM, Intel, and Microsoft in 1999. It today has developed a membership with 190 members and covers the major manufactures in all global continents. TCPA focuses on enhancing its security from computing platform infrastructure and releases a trusted computing platform standard specification in January, 2001. The TCPA is restructured as TCG (Trusted Computing Group) in March, 2003. Its target lies in widely using the trusted computing platform based on the hardware security module support in a computing and communication system so as to improve the security of the whole system.

TCG organization releases the standard of the TPM (Trusted Platform Moudle). At present, many secure chips conform to this standard. Moreover, since the security protection is implemented by hardware, it is becoming the standard configuration of PC, especially the portable PC.

Zero-knowledge proof is proposed by Goldwasser, et. Al. in 1980' at a first time. It refers to make the verifiers believe some allegation is correct without providing any useful information to the verifiers. zero-knowledge proof is essentially a protocol involving two or more parties, that is, a serial of steps needs to be taken by the two or more parties to complete a task. Certifiers prove to the verifiers and make them believe some message they had already knew or owned, but the certification process cannot leakage any information on the certified message to the verifiers. A lot of facts prove that the zero-knowledge proof is very useful in the cryptology. If the zero-knowledge proof can be used for verification, many problems can be solved in an efficient way.

Kerberos is a network authentication protocol. Its design target is to provide a powerful authentication service for client/server application program via key system. The authentication process is done independent of the authentication of the host operation system, without the trust based on the address of the host, with no requirement of the physical security of all the host on the network, and assuming that the data packet transmitted on the network can be arbitrarily red, modified and interposed with data therein. In the above cases, Kerberos is used as a trusted third party authentication service, and performs authentication service via conventional ciphergraph technology (for example, sharing keys). In particular, the authentication process is as follows: a client sends to an authentication server (AS) a request for a certificate of some server, and subsequently, AS responds with the certificate encrypted using the client's keys. The certificate is formed by 1) server "ticket"; 2) a temporal encryption key (also referred to as "session key"). The client sends ticket (including the client identity encrypted by the server's key and a copy of the session key) to the server. The session key (now shared by the client and server) may be not only used to authenticate the client or server, but also used to provide encryption service for the later communication between the communication parties, or provide further communication encryption service for the communication parties by exchanging the independent sub-session keys.

Description of any prior art herein should not be construed as admitting or implying: content therein is well-known or belongs to the common technical knowledge in the present field before the filing date or priority date of any claim.

Contents of the invention

Directed to one or more drawbacks existing in the prior art, an object of the present invention is to provide a secure communication authentication method and system in a distributed environment. By using the method and the system of the present invention, disadvantages in the aspects in a platform identity certification process in TCG remote certification are alleviated, a method for platform identity certification is expanded, and by combining three technologies, that are, zero-knowledge proof, a Kerberos framework and a virtual TPM, a new authentication method is designed, which is mainly intended to make improvement in the aspects in the existing method such as platform information exposure, a trusted third-party bottleneck and complexity avoidance.

In order to achieve the above object, a technical solution employed by the present invention is a secure communication authentication method in a distributed environment, a user performs an identity authentication using a zero-knowledge proof approach, the method comprising the steps of:

(1) sending by a user an identity certification request KRB_AS_REQ to an authentication server (AS) among Kerberos servers, and after received the request, verifying by the AS a user identity;
(2) after the user identity certification is passed, sending by the AS, to the user, a ticket and an authentication code conforming to the user identity, the ticket comprising an AIK certificate generated by means of combination of the Kerberos server and a zero-knowledge proof;
(3) when the user needs to perform remote certification with a remote certification server, carrying out by the user a session with a ticket granting server (TGS) by using the ticket and the authentication code, so as to obtain a ticket for communicating with an application server; and
(4) completing by the user the remote certification with the remote certification server.

A secure communication authentication system in a distributed environment is provided, comprising:

user platform, the user platform indicates a client required to perform an AIK certificate authentication;
Kerberos server including an authentication server (AS) and a ticket granting server (TGS), the authentication server (AS) for checking whether the property information provided by the user platform is in a safety valve, and for signing and issuing a TGS ticket and AIK certificate associated therewith to the user platform in the safety valve, and the ticket granting server (TGS) for checking whether the TGS ticket hold by the user platform is expired and for issuing a communicative application service ticket to the legal user platform; and
remote certification server for checking the AIK certificate and application service ticket when the user platform holding the application service ticket is communicating with the remote certification server, and if they are legal, then performing the application service with the user platform;
wherein the user platform, Kerberos server and remote certification server are connected with each other via internet.

One effect of the present invention lies in, by using the method and the system of the present invention, the problems of privacy exposure and efficiency in mutual verification between remote servers in the existing distributed system can be addressed. The present method combines the zero-knowledge proof, a Kerberos technology and a virtual TPM, when a platform requests for AIK certificate, uses the zero-knowledge proof approach, uses Kerberos as a TTP which is divided into AS and TGS in the Kerberos, AS performs AIK authentication, and thus, one TPM needs to perform AS authentication once. When needs to access network, an application server ticket is requested from the TGS, the remote certification can be performed, and thus the load of the TTP is reduced by work division and collaboration. vTPM architecture is used as the infrastructure of the platform. The security separation in terms of functions of modules is implemented by the virtual technologies. A new identity certification manner is established. The object of avoiding platform information exposure, avoiding a trusted third-party bottleneck and reducing remote certification complexity is fulfilled.

Description of figures

Figure 1 is a structure diagram of the system according to the present invention.
Figure 2 is an exemplary structure diagram of the AIK certification infrastructure in the process of remote certification of the method according to the present invention.
Figure 3 is a flowchart of the method according to the present invention.
Figure 4 is a flowchart of an AIK certificate generation protocol of the method according to the present invention.

Modes of carrying out the invention

The present invention will be further described with reference to the accompanying drawings and the preferable embodiments. It should be noted that unless otherwise expressly illustrated, the relative arrangement, mathematic expression s and numeral values of the components and steps set forth in these embodiments is not intended to limit the protection scope of the present invention.

The description of at least one exemplary embodiment hereinafter is in fact intended to be illustrative only, and in no sense to be any limitation to the present invention and its applications or uses.

The technologies, methods and devices already known by those ordinary skilled in the related art may not be discussed in detail, but when in appropriate cases, these technologies, methods and devices should be deemed to be a part of the granting specification.

In all the examples shown and discussed herein, any concrete values should be explained to be illustrative only, not to be limitation. Therefore, other examples of the exemplary embodiments may have different values.

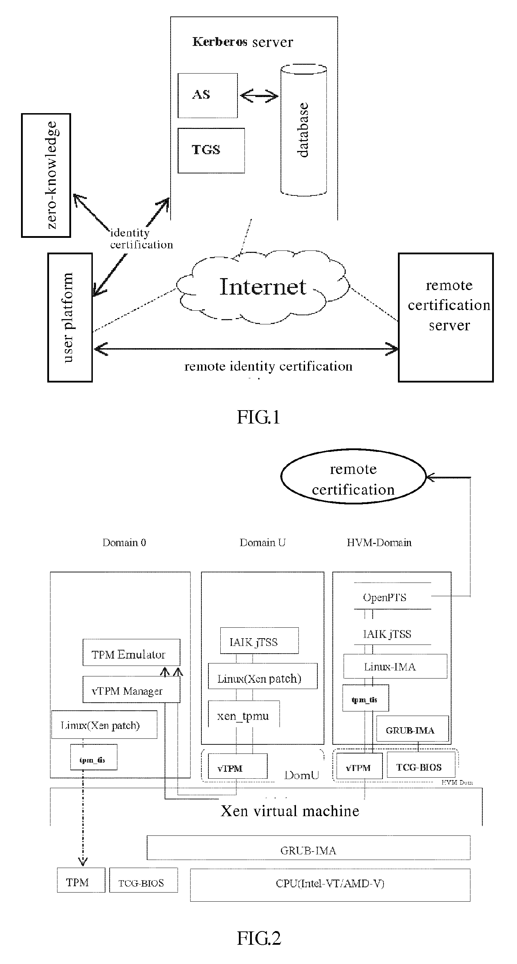

As shown in Figure 1, a secure communication authentication system in a distributed environment is provided, comprising:

user platform, the user platform indicates a client required to perform an AIK certificate authentication;

Kerberos server including an authentication server (AS) and a ticket granting server (TGS), the authentication server (AS) for checking whether the property information provided by the user platform is in a safety valve, and for signing and issuing a TGS ticket and an AIK certificate associated therewith to the user platform in the safety valve, and the ticket granting server (TGS) for checking whether the TGS ticket hold by the user platform is expired and for issuing a communicative application service ticket to the legal user platform; and

remote certification server for checking the AIK certificate and application service ticket when the user platform holding the application service ticket is communicating with the remote certification server, and if they are legal, then performing the application service with the user platform;

wherein the user platform, Kerberos server and remote certification server are connected with each other via internet.

In the embodiment, the user platform includes the following modules:

secure chip TPM/TCM for recording the metric values of the system property information of the user platform it locates in; and

XEN virtual machine for providing a secure and reliable implementing platform for the certification process. The workload sharing the same platform usually needs to keep independency for many reasons. Due to different interests, the websites having competitive services need to access each other's data, and this will result in many unsafe factors. Moreover, malicious softwares destroy the shared hardware environments in which runs these software normally. Visualization is increasingly used in production, so that in regard of software safety, stricter integrity and workload separation is increasingly required.

As shown in Figure 2, it is an exemplary infrastructure diagram of the user platform. In order to construct vTPM infrastructure, the user platform needs to be provided with secure chip TPM/TCM, the TPM is used as an example herein. CPU needs to possess Intel-VT or AMD-V virtual technologies; BIOS supports TCG specification and advanced configuration and power management interface (ACPI); and at the same time, it needs Linux system boot loader having IMA metric function (GRUB-IMA) to load the operation system.

There are mainly three virtual domains on XEN virtual machine. After the user platform is powered on, TPM uses its own trust metric root as a start point, performs integrity measure on other components of BIOS at first, and stores the metric values in PCR of the trusted cipher module, determiners the integrity of the BIOS according to the selected judgment mechanism, if the integrity is intact, runs BIOS; and measure the integrity of the Initial Program Loader (IPL)/Master Boot Record (MBR), determines IPL/MBR integrity based on the judgment mechanism, if the IPL/MBR integrity is intact, then run MBR; and then the IPL/MBR measures the integrity of the operation system OS kernel metric and loading component GRUB-IMA(GNU GRand Unified Bootloader-IMA, GRUB-IMA), if the integrity of the component is intact, then this component measure the integrity of the OS kernel, if it is not tampered, then run the OS kernel. After booted, OS kernel enters into Domain 0, and checks the integrity of OS services based on the identical mechanism, by passing the trust relationship, a trusted root is formed, thereby ensuring the booted system is trusted.

Domain 0 involves content of four sections: Linux operation system with XEN patch installed; drive program tpm_tis for communicating of OS and TPM; TPM Emulator; vTPM management function module vTPMManager in XEN, responsible for communication of vTPM management function module in XEN with TPM Emulator.

Domain U is a half virtualized virtual domain, and mainly involves the following sections: the function module vTPM in XEN, since the XEN virtual domain itself can not interact with the TPM, vTPM interacts with the TPM emulator by using the way of vTPM, TPM emulator invokes data of the underlying TPM hardware, and act as TPM hardware to perform data interaction with outside; there exist a communication drive program between XEN and TPM emulator, xen_tpmu, the drive is additionally added when compiling the kernel; IAIK jTSS is developed in Java language by Institut fuer Angewandte Informationsverarbeitung und Kommunikation (IAIK), is an implementation of TCG Software Stack (TSS), and provides an interface for accessing TPM and TPM Emulator with the upper layer application program. vTPM locates in XEN virtual machine, that is, in Domain 0, but functionally, it is an interface for the Domain U program to perform information interaction with the TPM Emulator in Domain 0, is the key of the execution of the function module in Domain U, so that it is circled by dotted line into the area of Domain U in Fig. 2.

HVM-Domain is a fully virtualized virtual domain and mainly involves the following sections: BIOS supporting TCG specification; OS loader with metric function to form trusted root; vTPM component for the virtual domain to perform data interaction with TPM Emulator; and at the same time, OS compiles the IMA component created by IBM into kernel (Linux-IMA) when performing kernel compile, for checking the measure results of the whole system and performing measure on softwares running in OS; Linux-IMA needs to interact with TPM hardware for checking TPM data, needs OS to load TPM drive tpm_tis; interface software IAIK jTSS used by user to program the TPM and TPM emulator; Open Platform Trust Services (OpenPTS) is proposed by TCG, and cooperate with other Trust computation- related Open software to perform trusted computation with remote challenger, with respect to the implementations related to Proof-of-Concept (PoC) and Platform Trust Services (PTS).

Domain 0 is responsible for coordinating and managing communication among the respective computing domains. After booting the TPM Emulator, it is in a standby state, waiting for the other party communicating with it. The vTPMManager is launched to manage the communication between TPM Emulator and vTPM. When the identity authentication is required, a user issues a TPM instruction in Domain U by using IAIK jTSS, prepares data relating to the TPM identity required for identity authentication. Once the vTPM received the instruction, it communicate with the vTPMManager in Domain0, inform the vTPMManager that it wishes to perform data interaction therewith via TPM Emulator. The vTPMManager will send the instruction toTPM Emulator. Once the TPM Emulator received the instruction, it will invoke the TPM data at underlying layer. When the data is ready, the TPM Emulator will feedback the data in a reverse order to the IAIK jTSS. The IAIK jTSS receives all the needed data, and subsequently send a identity authentication request to the AS. After the authentication is completed, the AS will transmit the AIK certificate to the IAIK jTSS. After the IAIK jTSS received the certificate, the IAIK jTSS will transmit it to Domain 0 for storing. HVM-Domain will extract the AIK certification from Domain0, and then requests for application program ticket from TCG, once the ticket is obtained, transmits the remote certification request to the remote certification server, and transmits both the AIK certificate and measure list to the remote certification server for remote certification. Such an execution method requires each virtual domain fulfill its own functions independent of any other virtual domain, and thus the security is improved.

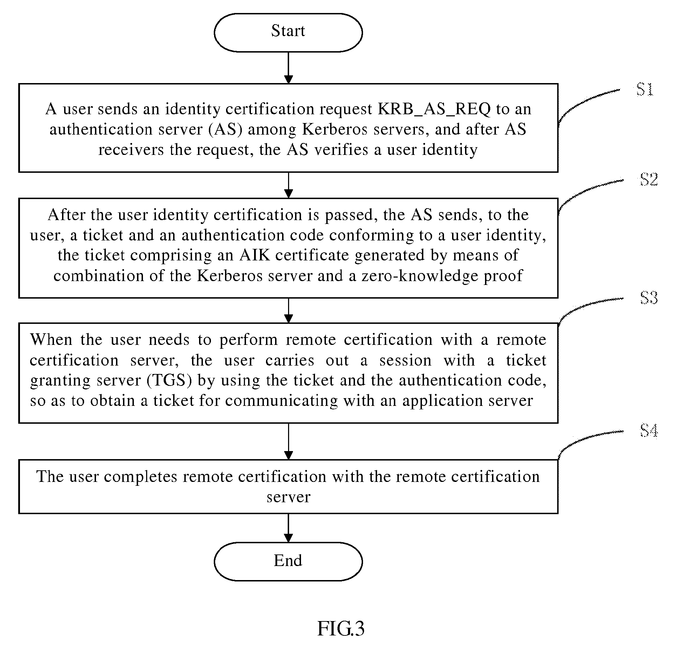

As shown in Fig.3, a secure communication authentication method in a distributed environment is provided, a user performs identity authentication by using a zero-knowledge proof approach, the method comprising:

In step S1, a user sends an identity certification request KRB_AS_REQ to an authentication server (AS) among Kerberos servers, and after AS receivers the request, the AS verifies a user identity;

In step S2, after the user identity certification is passed, the AS sends, to the user, a ticket and an authentication code conforming to a user identity, the ticket comprising an AIK certificate generated by means of combination of the Kerberos server and a zero-knowledge proof;

In step S3, when the user needs to perform remote certification with a remote certification server, the user carries out a session with a ticket granting server (TGS) by using the ticket and the authentication code, so as to obtain a ticket for communicating with an application server;

In step S4, the user completes remote certification with the remote certification server.

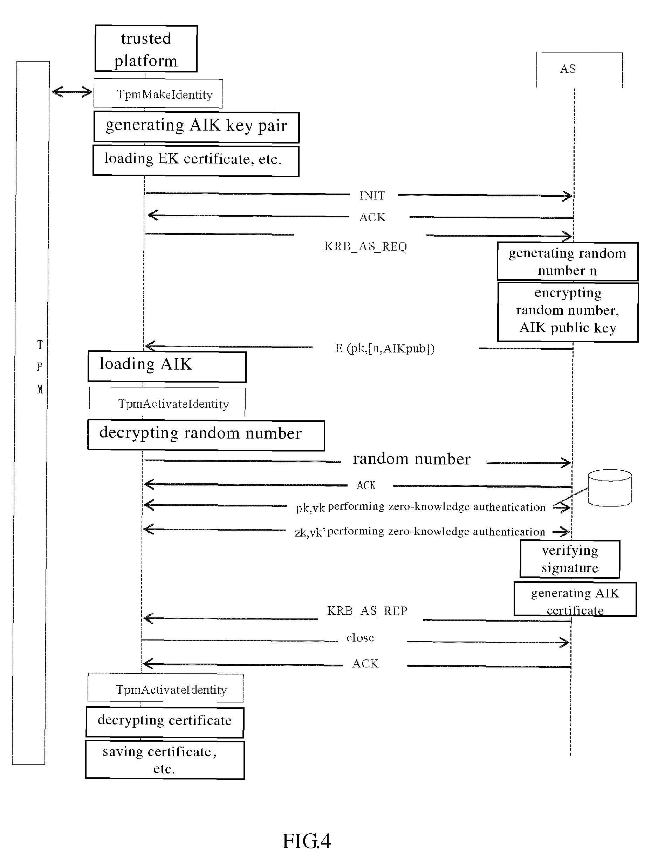

In the present embodiment, the process of generating AIK certificate by way of combination of Kerberos and zero-knowledge proof is shown in Fig.4. The certificate generation process is as follows:

(1) a user encapsulates the KRB_AS_REQ message

The user encapsulates the KRB_AS_REQ message as that in the original Kerberos protocol, except that a predefined block is replaced with the following message: $E(PUAS,KC,AS)\|pk\|vk$, where KC and AS is generated by the user and a session key of the AS is encrypted by using the public key PUAS of the AS, the message has a format of:

$$Option\|IDC\|Realmc\|IDTGS\|Times\|Nounce1\|E(PUAS,KC,AS)\|pk\|vk$$

where, $pk=E(AIKpub, EKpub), e1, e2, \cdots, ek$ is an output of a harsh function selected by the system with its input as follows:

$$Option\|IDC\|Realmc\|IDTGS\|Times\|Nounce1\|E(PUAS,KC,AS)\|pk.$$

As such, the intermediate's attack can be prevented efficiently.

(2) Kerberos received the KRB_AS_REQ message

After the AS received the KRB_AS_REQ message and before the TGS ticket is issued, the AS must authenticate the user's identity. The trusted platform performs a zero-knowledge protocol authentication with a trusted third party. Firstly, e1,e2,...,ek is generated by using the same algorithm as the user; secondly, the AS extracts corresponding verification information of the user's identify v1,v2,...,vk from its own database; thirdly, the AS checks whether the KRB_AS_REQ message transmitted to it meets the following equation:

$$pk = \pm vk^2 \prod_{e_j=1} v_j (\bmod\, n)$$

After the user identify authentication is passed, the trusted platform represents the certificate by using zk=E(AIKpub, ω), where ω indicating a collection of endorsement certificate, platform certificate, acknowledgement certificate and verification certificate, and the endorsement certification does not contain endorsement public key. The zk∥vk' is transmitted to the Kerberos, where vk' is the output of (equation 1) input as:

Option∥IDC∥Realmc∥IDTGS∥Times∥Nounce1∥E(PUAS,KC,AS)∥zk. That is, the Feige-Fiat-Shamir protocol is used for a second time. If the certificate is valid, decrypt the KRB_AS_REQ message to obtain the session keys KC, AS, encrypt AIK public key by using KC, AS to generate AIK certificate AIKcert, encrypt certificate by using pk to generate the KRB_AS_REP and transmit it to the trusted platform. Kerberos generates the KRB_AS_REP message, the ciphertext portion of the KRB_AS_REP message is encrypted by using the obtained session keys KC, AS by decrypting the ciphertext portion of the KRB_AS_REQ message, instead of using the user's password to encrypt. The messages is in the format of:

$$RealmC\|IDC\|TicketTGS\|E(KC,AS,[AIK\|KC,TGS\|Times\|IDTGS])$$

$$(equation\ 2)$$

Transmits it to the user, where AIK=E(pk,AIKcert).

(3) after the user received the message from the AS, the user sends to TGS a KRB_TGS_REQ message. The message contains the requested TGS ticket and identifier ID of the requested service. In addition, the user also sends an authentication code Authenticatorc, this message containing the user's identifier ID, the network address and timestamp and encrypted by using the session key as TGS, the session key indicates Kc, tgs obtained in the stage of AS information exchange. As compared with lifetime of the TGS ticket, the authentication code has a shorter lifetime and can be used only one time. Nounce2, Options and Times have the same functions as in the above message. The message is transmitter to TGS module of the Kerberos server in the format of:

$$Options\|IDv\|Times\|Nounce2\|Tickettgs\|Authenticatorc\ (equation\ 3)$$

where, Authenticatorc=E(Kc,tgs,[IDc∥Realmc∥TS1])

4) after the legality of the KRB_TGS_REQ message is successfully verified, TGS starts to assemble the KRB_TGS_REP message. The format of this message is identical with the KRB_TGS_REP message (equation 2). Firstly, a Kerberos server determines a property of an application server ticket to be sent to the user based on the message (equation 3) and received TGS ticket, and then encrypts the ticket by using the corresponding application server key extracted from a user password database so as to generate a ticket for the application server. The ciphertext portion of the KRB_TGS_REP message uses the same session key Kc, tgs as the AS message exchange, and the session key Kc, v used in the message exchange of the application server is also distributed in the stage of TGS information exchange, both the user and the application server can obtain the session key from the corresponding domains. The KRB_TGS_REP message has a format as follows:

$$realmc\|IDc\|Ticketv\|E(Kc,tgs,[Kc,v\|Times\|Nounce2\|Realmv\|IDv])$$

$$(equation\ 4)\ where,\ Ticketv=E(Kv,[Flags\|Kc,v\|Realmc\|IDc\|ADc\|Times]).$$

where, Ticketv=E(Kv,[Flags‖Kc,v‖Realmc‖IDc‖ADc‖Times]). Remote Attestation(RA) is capable of being connected to by using the obtained ticket and authentication code. The client sends IMA measure list and PCR 10 value signed by the currently used AIK to the server. RA server checks the validity of the ticket and authentication code for whether they are issued by the trusted Kerberos.

The present disclosure also provides one or more computer readable medium embedded with computer executable instructions. When executed by the computer, the instructions execute a secure communication authentication method in a distributed environment, a user performs identity authentication by using a zero-knowledge proof approach, comprising: (1) a user sends an identity certification request KRB_AS_REQ to an authentication server (AS) among Kerberos servers, and after AS receivers the request, the AS verifies a user identity; (2) after the user identity certification is passed, the AS sends, to the user, a ticket and an authentication code conforming to a user identity, the ticket comprising an AIK certificate generated by means of combination of the Kerberos server and a zero-knowledge proof; (3) when the user needs to perform remote certification with a remote certification server, the user carries out a session with a ticket granting server (TGS) by using the ticket and the authentication code, so as to obtain a ticket for communicating with an application server; (4) the user completes remote certification with the remote certification server.

The present disclosure also provides a computer including one or more computer readable medium embedded with computer executable instructions. When executed by the computer, the instructions execute a secure communication authentication method in a distributed environment.

Exemplary operation environments

The computing device such as those described herein have hardware, including one or more processor or processing unit, system storage or computer readable medium in some form. By way of example and no limitation, the computer readable medium includes the computer storage medium and communication medium. The computer storage medium includes volatile and nonvolatile, removable and unremovable medium implemented by using any method and technologies for storing information such as computer readable instruction, data structure, program module or other data. The communication medium is generally embodied with computer readable instruction, data structure, program module or other data by using modulated data signal by such as carriers or other transmission mechanism and so on, and includes any information transport medium. Any of the combinations of the above-described medium also fall within the scope of the computer readable medium.

The computer can use one or more remote computers, such as logics of the remote computer are connected in the networked environment to operate. Although the present invention is described with respect to the exemplary computing system environment, the respective embodiments of the present invention can be used in numerous other general or private computing system environments or configurations. The computing system environments are not intended to set any limitation to the application range or functions of any aspects of the present invention. Further, the computer environment should not be construed as there existing any dependence on or requirement of any components or their combinations as shown in the exemplary operation environment. Examples of the well known computing system, environment and / or configuration suitable for respective aspects of the present invention include but not limit to personable computer, server computer, handheld or laptop device, multiprocessor system, microprocessor-based system, set-top box, programmable consumer electronic products, mobile telephone, network PC, micro-computer, macro-computer, the distributed computing environment including anyone of the systems or devices as indicated above, and the like.

The embodiments of the present invention can be described in the general context of the computer executable instructions executed on one or more computing devices such as program modules. The computer executable instructions can be organized as one or more computer executable components or modules by the software. Generally, program modules include but not limit to routines, program, object, component, and data structure performing certain task or implementing specific abstract data type. The aspects of the present invention can be implemented by using any number of such components or modules or their organizations. For example, the aspects of the present invention is not limited to the specific computer executable instructions or specific components or modules as shown in figures and described herein. Other embodiments of the present invention may include different computer executable instructions or components with functions more or less than functions as shown and described herein. The aspects of the present invention can be implemented in the distributed computing environment in which tasks are performed by the remote processing device via communication network links. In the distributed computing environment, the program modules can be located in the local and remote computer storage medium including memory storages.

Those skilled in the art should understand that the descriptions of the method and system of the present invention are not limited to the embodiments such as the specific embodiments disclosed herein. The above descriptions have been presented for purposes of illustration of the present invention, but are not intended to limit the present invention in any way. Other implementations derived from technical solutions of the present invention by those skilled in the art also fall within the scope of the inventive and novel technologies according to the present invention. The protection scope of the present invention is defined by the following claims and equivalents thereof.

**Claims**

1. A secure communication authentication method in a distributed environment, a user performs an identity authentication using a zero-knowledge proof approach, the method comprising the steps of:

   (1) sending by a user an identity certification request KRB_AS_REQ to an authentication server (AS) among Kerberos servers, and after received the request, verifying by the AS a user identity;
   (2) after the user identity certification is passed, sending by the AS, to the user, a ticket and an authentication code conforming to the user identity, the ticket comprising an AIK certificate generated by means of combination of the Kerberos server and a zero-knowledge proof;
   (3) when the user needs to perform remote certification with a remote certification server, carrying out by the user a session with a ticket granting server (TGS) by using the ticket and the authentication code, so as to obtain a ticket for communicating with an application server; and
   (4) completing by the user the remote certification with the remote certification server.

2. A secure communication authentication method in a distributed environment of claim 1, wherein in the step (2), a method of generating the AIK certificate by means of combination of the Kerberos server and a zero-knowledge proof comprises the step of:

   1) encapsulating by a user the KRB_AS_REQ message;
   2) after the AS among the Kerberos servers received the KRB_AS_REQ message and before the TGS ticket is issued, authenticating by the AS the user's identity, and performing by a trusted platform a zero-knowledge protocol authentication with a trusted third party;
   3) after received the message from the AS, sending by the user to the TGS a KRB_TGS_REQ message; and
   4) after legality of the KRB_TGS_REQ message is successfully verified, starting by the TGS to assemble the KRB_TGS_REP message.

3. A secure communication authentication method in a distributed environment of claim 2, wherein in the step 1), in encapsulating by the user the KRB_AS_REQ message, a predefined block is replaced with the following message: E(PUAS,KC,AS)‖pk‖vk, where KC, AS are generated by the user and a session key of the AS is encrypted by using the public key PUAS of the AS, the message has a format of:

$$Option\|IDC\|Realmc\|IDTGS\|Times\|Nounce1\|E(PUAS,KC,AS)\|pk\|vk$$

   Where, pk=E(AIKpub, EKpub), e1,e2,···,ek is an output of a harsh function selected by the system with an input as follows:

$$Option\|IDC\|Realmc\|IDTGS\|Times\|Nounce1\|E(PUAS,KC,AS)\|pk.$$

4. A secure communication authentication method in a distributed environment of claim 2, wherein in the step 2), a method of authenticating by the AS the user's identity comprises: firstly, generating e1,e2,...,ek by using the same algorithm as the user; secondly, extracting by the AS corresponding verification information of the user's identify v1,v2,...,vk from its own database; thirdly, checking by the AS whether the KRB_AS_REQ message transmitted thereto meets the following equation:

$$pk = \pm vk^2 \prod_{e_j=1} v_j \pmod{n}$$

   After the user identify authentication is passed, the trusted platform represents the certificate by using zk=E(AIKpub, ω), where ω indicating a collection of endorsement certificate, platform certificate, acknowledgement certificate and verification certificate, and the endorsement certificate does not contain endorsement public key.

**5.** A secure communication authentication method in a distributed environment of claim 2 or 3 or 4, wherein in the step 3), the user also sends an authentication code Authenticatorc, this message contains a user's identifier ID, a network address and a timestamp, and is encrypted by using the session key with the TGS, and the session key indicates Kc, tgs obtained in the stage of AS information exchange, and as compared with lifetime of the TGS ticket, the authentication code has a shorter lifetime and can be used only one time.

**6.** A secure communication authentication method in a distributed environment of claim 5, wherein in the step 4), a method of assembling by the TGS the KRB_TGS_REP message comprises the step of:

Firstly, determining by a Kerberos server a property of an application server ticket to be sent to the user based on the message and received TGS ticket;
next, encrypting the ticket by using the corresponding application server key extracted from a user password database so as to generate a ticket for the application server;
wherein the ciphertext portion of the KRB_TGS_REP message uses the same session key Kc, tgs as the AS message exchange, and the session key Kc, v used in the message exchange of the application server is also distributed in the stage of TGS information exchange, both the user and the application server can obtain the session key from the corresponding domains;
wherein the KRB_TGS_REP message has a format as follows:

$$\text{realmc} \| \text{IDc} \| \text{Ticketv} \| E(Kc,tgs,[Kc,v \| \text{Times} \| \text{Nounce2} \| \text{Realmv} \| \text{IDv}])$$

where, Ticketv=E(Kv,[Flags∥Kc,v∥Realmc∥IDc∥ADc∥Times]).

**7.** A secure communication authentication system in a distributed environment, comprising:

user platform, the user platform indicates a client required to perform an AIK certificate authentication;
Kerberos server including an authentication server (AS) and a ticket granting server (TGS), the authentication server (AS) for checking whether the property information provided by the user platform is in a safety valve, and for signing and issuing a TGS ticket and AIK certificate associated therewith to the user platform in the safety valve, and the ticket granting server (TGS) for checking whether the TGS ticket hold by the user platform is expired and for issuing a communicative application service ticket to the legal user platform; and
remote certification server for checking the AIK certificate and application service ticket when the user platform holding the application service ticket is communicating with the remote certification server, and if they are legal, then performing the application service with the user platform;
wherein the user platform, Kerberos server and remote certification server are connected with each other via internet.

**8.** A secure communication authentication system in a distributed environment of claim 7, wherein the user platform includes the following modules:

secure chip TPM/TCM for recording the metric values of the system property information of the user platform it locates in; and
XEN virtual machine for providing a secure and reliable implementing platform for the certification process.

**9.** A secure communication authentication system in a distributed environment of claim 8, wherein a CPU of the secure chip TPM is provided with Intel-VT or AMD-V virtual technologies; BIOS supports TCG specification and advanced configuration and power management interface; and at the same time, a Linux system boot loader (GRUB-IMA) having IMA metric function is required to load an operation system.

**10.** A secure communication authentication system in a distributed environment of claim 7 or 8 or 9, wherein the XEN virtual machine includes three virtual domains, Domain 0, Domain U and HVM-Domain, and after the user platform is powered on, by using its own trust metric root as a start point, the TPM firstly measures integrity of other components of the BIOS, and stores the metric values into the PCR of the trusted cipher module, and determines the integrity of the BIOS according to the selected judgment mechanism, and if the integrity is intact, then runs the BIOS; and measures the integrity of the IPL/MBR, and determines the integrity of the IRL/MBR based on the judgment mechanism, and if the integrity of the IPL/MBR is intact, then runs the MBR; and then the IPL/MBR measure the integrity of the OS kernel metric and load component GRUB-IMA, and if the integrity of the component is intact, this component measures the integrity of the OS kernel, and if it is not tampered, then runs the OS kernel; after being booted, the OS kernel enters into Domain 0, checks the OS service integrity based on the same mechanism, by passing the trust relationship, the trusted root is formed, thereby ensuring the booted system is trusted.

## Kerberos server

AS ⟷ database

TGS

zero-knowledge

identity
certification

user platform

Internet

remote
certification
server

remote identity certification

FIG.1

remote
certification

Domain 0          Domain U          HVM-Domain

OpenPTS

IAIK jTSS

TPM Emulator          IAIK jTSS          Linux-IMA

vTPM Manager          Linux(Xen patch)          tpm_tis

Linux(Xen patch)          xen_tpmu          GRUB-IMA

tpm_tis          vTPM          vTPM          TCG-BIOS

DomU          HVM Dom

Xen virtual machine

GRUB-IMA

TPM          TCG-BIOS          CPU(Intel-VT/AMD-V)

FIG.2

```
                    ┌───────────────┐
                    │     Start     │
                    └───────┬───────┘
                            │
                            ▼
┌───────────────────────────────────────────────────────┐
│  A user sends an identity certification request        │ ── S1
│  KRB_AS_REQ to an authentication server (AS) among     │
│  Kerberos servers, and after AS receivers the          │
│  request, the AS verifies a user identity              │
└───────────────────────────┬───────────────────────────┘
                            ▼
┌───────────────────────────────────────────────────────┐
│  After the user identity certification is passed, the  │ ── S2
│  AS sends, to the user, a ticket and an authentication │
│  code conforming to a user identity, the ticket        │
│  comprising an AIK certificate generated by means of   │
│  combination of the Kerberos server and a              │
│  zero-knowledge proof                                  │
└───────────────────────────┬───────────────────────────┘
                            ▼
┌───────────────────────────────────────────────────────┐
│  When the user needs to perform remote certification   │ ── S3
│  with a remote certification server, the user carries  │
│  out a session with a ticket granting server (TGS) by  │
│  using the ticket and the authentication code, so as   │
│  to obtain a ticket for communicating with an          │
│  application server                                    │
└───────────────────────────┬───────────────────────────┘
                            ▼
┌───────────────────────────────────────────────────────┐
│  The user completes remote certification with the      │ ── S4
│  remote certification server                           │
└───────────────────────────┬───────────────────────────┘
                            ▼
                    ┌───────────────┐
                    │      End      │
                    └───────────────┘
```

FIG.3

FIG.4

# INTERNATIONAL SEARCH REPORT

| International application No. |
|---|
| PCT/CN2013/086753 |

**A. CLASSIFICATION OF SUBJECT MATTER**

See the extra sheet
According to International Patent Classification (IPC) or to both national classification and IPC

**B. FIELDS SEARCHED**

Minimum documentation searched (classification system followed by classification symbols)

IPC: H04L; G06F

Documentation searched other than minimum documentation to the extent that such documents are included in the fields searched

Electronic data base consulted during the international search (name of data base and, where practicable, search terms used)

CNABS, CNTXT, CNKI: distributed, kerberos, authentication server, AS, Ticket Grant Server, TGS, KRB_AS_REQ, KRB_TGS_REQ, zero knowledge, Trusted Platform, TPM, Trusted Third Party, TTP, AIK; VEN: zero knowledge proof, ZKP

**C. DOCUMENTS CONSIDERED TO BE RELEVANT**

| Category* | Citation of document, with indication, where appropriate, of the relevant passages | Relevant to claim No. |
|---|---|---|
| A | CN 101479987 A (MICROSOFT CORP.) 08 July 2009 (08.07.2009), the whole document | 1-10 |
| A | CN 101051898 A (HUAWEI TECHNOLOGIES CO., LTD.) 10 October 2007 (10.10.2007), the whole document | 1-10 |
| A | CN 1625105 A (IBM CORP.) 08 June 2005 (08.06.2005), the whole document | 1-10 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 February 2014 (11.02.2014) | 27 February 2014 (27.02.2014) |

| Name and mailing address of the ISA/CN | Authorized officer |
|---|---|
| State Intellectual Property Office of the P. R. China No. 6, Xitucheng Road, Jimenqiao Haidian District, Beijing 100088, China Facsimile No. (86-10) 62019451 | NIE, Jincheng Telephone No. (86-10) 62412155 |

Form PCT/ISA /210 (second sheet) (July 2009)

## INTERNATIONAL SEARCH REPORT
Information on patent family members

| | International application No. |
|---|---|
| | PCT/CN2013/086753 |

| Patent Documents referred in the Report | Publication Date | Patent Family | Publication Date |
|---|---|---|---|
| CN 101479987 A | 08.07.2009 | CA 2653615 A1 | 31.07.2008 |
| | | US 2010242102 A1 | 23.09.2010 |
| | | AU 2007345313 B2 | 16.12.2010 |
| | | IN 200807105 P4 | 21.08.2009 |
| | | WO 2008091277 A3 | 18.12.2008 |
| | | NO 20085023 A | 12.12.2008 |
| | | MX 2008015958 A | 31.03.2009 |
| | | RU 2008152118 A | 10.07.2010 |
| | | AU 2007345313 A1 | 31.07.2008 |
| | | JP 2010505286 A | 18.02.2010 |
| | | RU 2434340 C2 | 20.11.2011 |
| | | EP 2033359 A2 | 11.03.2009 |
| | | WO 2008091277 A2 | 31.07.2008 |
| | | KR 20090041365 A | 28.04.2009 |
| CN 101051898 A | 10.10.2007 | CN 101051898 B | 21.04.2010 |
| CN 1625105 A | 08.06.2005 | JP 4064914 B2 | 19.03.2008 |
| | | US 8171295 B2 | 01.05.2012 |
| | | US 2005120219 A1 | 02.06.2005 |
| | | JP 2005167589 A | 23.06.2005 |
| | | CN 100594692 C | 17.03.2010 |

Form PCT/ISA/210 (patent family annex) (July 2009)

## INTERNATIONAL SEARCH REPORT

International application No.

PCT/CN2013/086753

**A. CLASSIFICATION OF SUBJECT MATTER**

H04L 9/32 (2006.01) i

H04L 9/14 (2006.01) n

Form PCT/ISA /210 (extra sheet) (July 2009)